# EUROPÄISCHE PATENTANMELDUNG

(11) **EP 0 889 266 A2**
(43) Veröffentlichungstag der Anmeldung: **07.01.1999**
(21) Anmeldenummer: 98110623.0
(22) Anmeldetag: 10.06.1998
(51) Int. Cl.: F16K 11/04, F16K 27/02

(54) **Schaltventil**

(30) Priorität: 30.06.1997 DE 19727729
(71) Anmelder: Amazonen-Werke H. Dreyer GmbH & Co. KG, D-49205 Hasbergen (DE)
(72) Erfinder: Oberheide, Friedrich, Dipl.-Ing., 49143 Bissendorf (DE)

(57) **Zusammenfassung**

Schaltventil (4) mit Gehäuse (14) für die Betätigung von Spritzdüsen einer Teilbreite eines Spritzbalkens einer landwirtschaftlichen Feldspritze, wobei in dem Gehäuse eine von einer Ventilstange (16) durchsetzte Bohrung (15), an welche eine Druckleitung (13) angeschlossen ist, die wahlweise durch auf der Ventilstange angeordnete Ventilelemente (18,19) je nach Stellung der Ventilstange (16) mit der zu der Teilbreite der Spritzdüsen führenden Spritzleitung (8) oder mit in den Spritzmitteltank zurückführenden Rückführleitung (9) verbindbar ist, angeordnet ist, und mit einer weiteren im Gehäuse angebrachten und mit dem Spritzmitteltank verbundenen Zweigbohrung (23), die durch eine an der Ventilstange (16) angeordneten Ventilanordnung (24) mit der Spritzleitung (8) bei Stellung der Ventilstange in Position 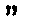 nicht Spritzen" verbindbar ist. Die Ventilanordnung (24) ist in einer von der Ventilstange durchsetzten Bohrung (15') auf der Ventilstange angeordnet. Die Zweigbohrung (23) mündet in die von der Ventilstange durchsetzten Bohrung (15'). Die Ventilanordnung ist als auf der Ventilstange beabstandet zueinander angeordnete und mit der Bohrung zusammenwirkende Dichtringe (25) ausgebildet.

## Beschreibung

Die Erfindung betrifft ein Schaltventil gemäß des Oberbegriffes des Patentanspruches 1.

Ein derartiges Schaltventil ist in der DE-GM 93 01 937 beschrieben. Bei diesem bekannten Schaltventil sind auf der Ventilstange mehrere Ventilteller beabstandet zueinander angeordnet, wobei jeweils zwei Ventilteller genau zueinander einjustiert sein müssen, damit sie in der jeweiligen Schaltstellung die abzusperrenden Räume und Leitungen dicht absperren. Diese Einstellarbeiten sind, insbesondere nach vorgenommener Reparaturarbeit, sehr aufwendig.

Der Erfindung liegt die Aufgabe zugrunde, das bekannte Schaltventil wesentlich zu vereinfachen.

Diese Aufgabe wird erfindungsgemäß durch die kennzeichnenden Merkmale des Patentanspruches 1 gelöst. Infolge dieser Maßnahmen ist es nicht erforderlich, daß die Ventilelemente genau zu der Ventilanordnung einjustiert sein müssen, da die Ventilanordnung mit Ihren Dichtringen innerhalb einer Bohrung die Zweigbohrung abdichtet bzw. bei Verstellen des Ventilbolzens freigibt. Somit dichten die Dichtringe über einen ausreichend langen Verstellweg des Ventilbolzens ab, so daß Einjustierarbeiten nicht erforderlich sind. Fertigungstoleranzen werden sicher ausgeglichen.

Weitere Einzelheiten der Erfindung sind den übrigen Unteransprüchen, der Beispielsbeschreibung und den Zeichnungen zu entnehmen. Hierbei zeigen
- Fig.1: den Funktionsplan einer Feldspritze in Prinzipdarstellung,
- Fig.2: das Schaltventil im Teilschnitt und vergrößertem Maßstab in der Stellung 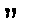 Spritzen ein" und
- Fig.3: das Schaltventil in der Stellung 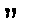 Spritzen aus" in der Darstellungsweise wie in Fig.2.

Die Feldspritze weist u.a. einen Flüssigkeitstank 1, eine motorisch angetriebene Pumpe 2, ein Druckregelventil 3, die Teilbreitenschaltventile 4, die zu den einzelnen Teilbreiten 5 des mit Spritzdüsen 6 bestückten Spritzgestänges 7 führenden Spritzleitungen 8, die Rückführleitung 9 (mündet in eine Sammelrückleitung 9') der Gleichdruckarmaturen 10 sowie die Rückleitung 11, die in die Sammelleitung 11' mündet, der Druckentlastung 12 und die vom Druckregelventil 3 zu dem Schaltventil 4 führende Druckleitung 13 auf.

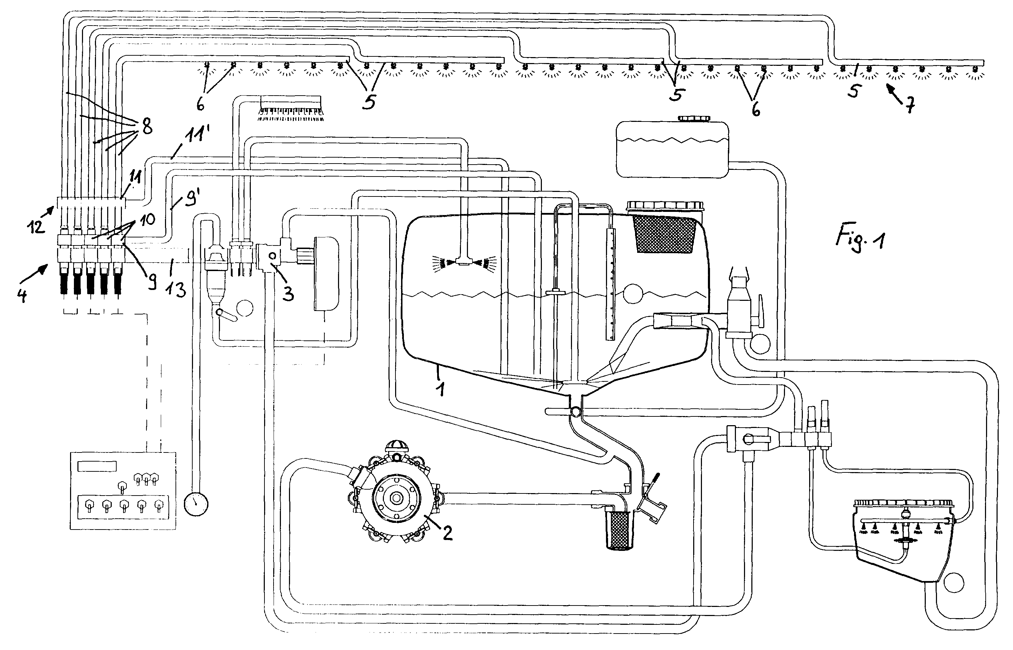

Die einzelnen Schaltventile 4 für jede Teilbreite 5 sind nebeneinander angeordnet, wie Fig.1 zeigt. Jedes Schaltventil 4 weist ein Gehäuse 14 auf. Dieses Gehäuse 14 weist eine Bohrung 15 auf, die von der Ventilstange 16 durchsetzt ist. An der Stelle 17 des Gehäuses 14 mündet die Druckleitung 13 in die von der Ventilstange 16 durchsetzten Bohrung 15. Auf der einen Seite ist die Bohrung 15 an die Rückführleitung 9, die ein Gleichdruckventil 10 aufweist, angeschlossen. Auf der anderen Seite ist die Bohrung 15 an der zu einer Teilbreite 5 führenden Spritzleitung 8 angeschlossen.

In dem Bereich 17, in dem die Druckleitung 13 in die von der Ventilstange 16 durchsetzten Bohrung 15 mündet, sind die Ventilelemente 18 und 19 angeordnet. Mittels dieser Ventilelemente 18 und 19 ist die Druckleitung 13 zu der Rückführleitung 9 oder zu der Spritzleitung 8 abzusperren. Die Ventilstange 16 ist an der Stelle 20 mit der Stellspindel 21 des elektromotorischen Stellelementes 22 verbunden. Desweiteren ist an dem Gehäuse 14 eine Zweigbohrung 23 angebracht, die in der von der Ventilstange 16 durchsetzten Bohrung 15 mündet, und die Bohrung 15 mit der Leitung 11 verbindet. Die Zweigbohrung 23 wird durch die Ventilanordnung 24, die auf der Ventilstange 16 im Bereich der Zweigbohrung 23 die von der Ventilstange 16 durchsetzte Bohrung 15' zu der Spritzleitung 8 abschließt. Zur Abdichtung dieser Bohrung 15' gegenüber der Spritzleitung 8 sind auf der Ventilstange 16 zwei beabstandet zueinander angeordnete Dichtringe 25 der Ventilanordnung 24 angeordnet. Die Bohrung 23 ist über die Verbindungskanäle 26 bzw. den Verbindungskanal mit der Spritzleitung 8 verbunden.

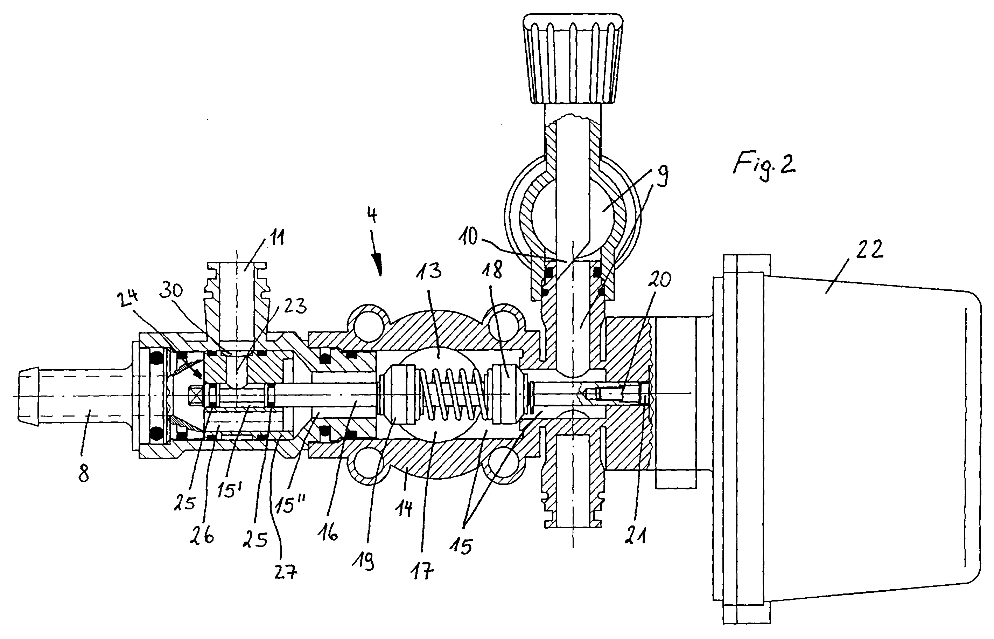

Die Funktionsweise des Ventil ist folgende; In der Stellung 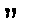 Spritzen ein" befindet sich die Ventilstange 16 mit den Ventilelementen 18 und 19 und den Dichtringen 25 in der in Fig.2 dargestellten Position. Hierbei schließt das Ventilelement 18 die Druckleitung 13 gegenüber der Rückführleitung 9 ab, so daß die Flüssigkeit von der Druckleitung 13 über den Teil 15'' der von der Ventilstange durchsetzten Bohrung 15 durch die Öffnung 26 an der Ventilanordnung 24 vorbei zu der Spritzleitung 8 gelangt. Um in der dargestellten Ausführung zu gewährleisten, daß eine ausreichende Flüssigkeitsmenge von der Druckleitung 13 zu der Spritzleitung 8 gelangt, sind in dem Bauteil 27 mehrere Bohrungen 26 um die von der Ventilstange 16 durchsetzten Bohrung 15' angebracht. Durch die Dichtringe 25 der Ventilanordnung 24 wird die Zweigbohrung 23 gegenüber der Spritzleitung 8 abgedichtet.

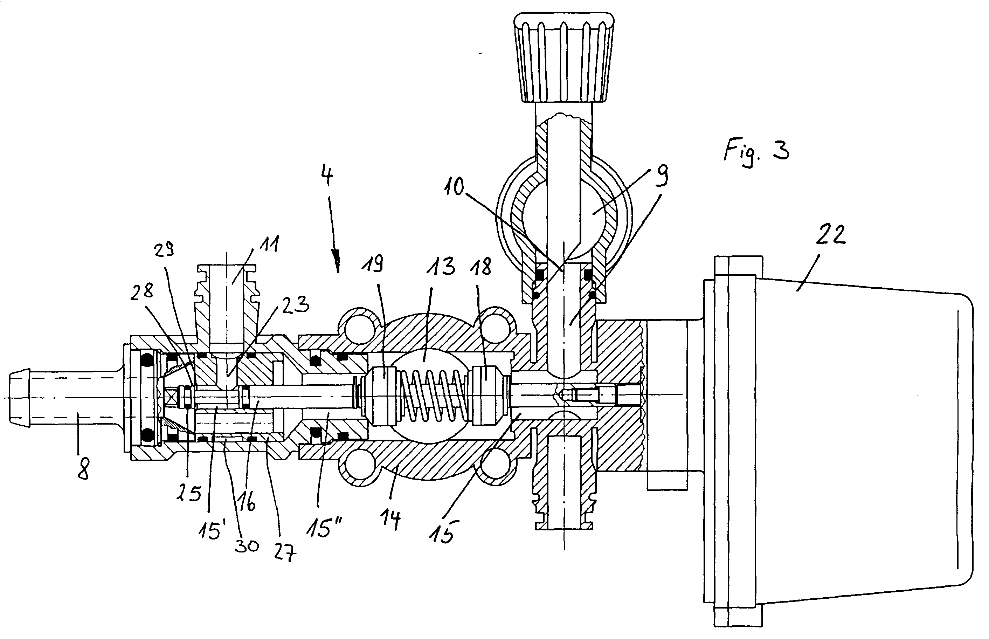

Wenn eine Treilbreite 6 abgeschaltet wird, wird mittels des motorischen Stellelementes 22 die Ventilstange 16 aus der in Fig.2 dargestellten Position in die in Fig.3 dargestellten Position verfahren, so daß das Ventilelement 19 die Druckleitung 13 gegenüber der Spritzleitung 8 abdichtet. Gleichzeitig wird das Ventil 18 von dem Ventilsitz abgehoben und die Verbindung zur Rückführleitung 9 über die Gleichdruckarmatur 10 freigegeben, so daß die Flüssigkeit über die Rückführleitung 9 und 9' in den Spritzmitteltank 1 zurückgeführt wird. Desweiteren wird gleichzeitig durch Verschieben der Ventilstange 15 die Ventilanordnung 24 mit den Dichtringen 25 verschoben, so daß ein Ringspalt 28 zwischen dem Dichtring 25 und der Vorderkante 29 der von der Ventilstange 16 durchsetzten Bohrung 15 zu der Zweigbohrung 23 freigegeben, so daß die Flüssigkeit, die in der zu der abgeschalteten Teilbreite 5 führenden Leitung 8 unter Druck steht, über die Zweigbohrung 23 und die Rückführleitung 11 in den Flüssigkeitstank 1 sich entspannen kann, so daß die den Spritzdüsen 6 zugeordneten Rückschlagventile schnell schließen können, damit die Düsen 6 nicht nachtropfen. Im Bereich der Zweigbohrung 23 weist das Bauteil 27 eine umlaufende Ringnut 30 auf, damit sichergestellt ist, daß in der jeder Einbauposition des Bauteiles 27 eine Verbindung der Zweigbohrung 23 zu dem Anschluß zu der Rückführleitung 11 besteht.

## Patentansprüche

1. Schaltventil mit Gehäuse für die Betätigung von Spritzdüsen einer Teilbreite eines Spritzbalkens einer landwirtschaftlichen Feldspritze, wobei in dem Gehäuse eine von einer Ventilstange durchsetzte Bohrung, an welche eine Druckleitung angeschlossen ist, die wahlweise durch auf der Ventilstange angeordnete Ventilelemente je nach Stellung der Ventilstange mit der zu der Teilbreite der Spritzdüsen führenden Spritzleitung oder mit in den Spritzmitteltank zurückführenden Rückführleitung verbindbar ist, angeordnet ist, und mit einer weiteren im Gehäuse angebrachten und mit dem Spritzmitteltank verbundenen Zweigbohrung, die durch eine an der Ventilstange angeordneten Ventilanordnung mit der Spritzleitung bei Stellung der Ventilstange in Position 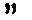 nicht Spritzen" verbindbar ist, dadurch gekennzeichnet, daß die Ventilanordnung (24, 25) in einer von der Ventilstange (16) durchsetzten Bohrung (15, 15', 15'') auf der Ventilstange (16) angeordnet ist, daß die Zweigbohrung (23) in die von der Ventilstange (16) durchsetzten Bohrung (15') mündet, daß die Ventilanordnung (24, 25) als auf der Ventilstange (16) beabstandet zueinander angeordnete und mit der Bohrung (15') zusammenwirkende Dichtringe (25) ausgebildet ist.

2. Schaltventil nach Anspruch 1, dadurch gekennzeichnet, daß die Ventilstange (16) mittels eines elektromotorischen Stellelementes (22) in die jeweilige Schaltstellung bringbar ist.

3. Schaltventil nach Anspruch 1, dadurch gekennzeichnet, daß die von der Ventilstange (16) durchsetzte Bohrung (15) einen größeren Durchmesser als der Außendurchmesser der Ventilstange (16) zumindest zum Teil im Bereich der Bohrung (15') aufweist.
